**Europäisches Patentamt**

**European Patent Office**

**Office européen des brevets**

(11) Veröffentlichungsnummer: **0 160 955**
**B1**

(12) **EUROPÄISCHE PATENTSCHRIFT**

(45) Veröffentlichungstag der Patentschrift:
**04.11.87**

(21) Anmeldenummer: **85105474.2**

(22) Anmeldetag: **04.05.85**

(51) Int. Cl.⁴: **B 62 D 25/02,** B 60 R 19/02,
B 60 K 11/08

(54) Anordnung eines Kraftfahrzeug-Frontteils aus Kunststoff an der Fahrzeugkarosserie.

(30) Priorität: **10.05.84 DE 3417337**

(43) Veröffentlichungstag der Anmeldung:
**13.11.85 Patentblatt 85/46**

(45) Bekanntmachung des Hinweises auf die Patenterteilung:
**04.11.87 Patentblatt 87/45**

(84) Benannte Vertragsstaaten:
**BE DE FR GB IT**

(56) Entgegenhaltungen:
**FR-A-2 396 684**
**US-A-3 731 961**

(73) Patentinhaber: **Adam Opel Aktiengesellschaft,
Bahnhofsplatz 1 Postfach 1560, D-6090
Rüsselsheim (DE)**

(72) Erfinder: **Trabert, Hans- Gerhard, Ernst- Reuter-
Strasse 26, D-6090 Rüsselsheim (DE)**

(74) Vertreter: **Elbert, Karl, Dipl.- Ing., Adam Opel AG
Bahnhofsplatz 1 Postfach 1560, D-6090
Rüsselsheim (DE)**

EP 0 160 955 B1

## Beschreibung

Die Erfindung betrifft die Anordnung eines Kraftfahrzeug-Frontteils aus Kunststoff an der Fahrzeugkarosserie, das aus einem Stoßfänger mit einer einteilig angeformten Kühlerverkleidung besteht und an einem Tragwerk der Karosserie mindestens an zwei unteren und drei oberen Befestigungspunkten im Bereich der Karosserielängsträger bzw. einer die Radkästen verbindenden oberen Quertraverse in Löchern bzw. Langlöchern kraftschlüssig gehalten ist.

Ein solches z. B. aus der FR-A-23 96 684 bekanntes einstückig, beispielsweise aus polymerem Kunststoffmaterial geformtes und gegebenenfalls durch metallische Armierung oder Hinterstützung versteiftes Frontteil wird bekanntermaßen an einem Tragwerk der Karosserie durch Schraubverbindungen festgelegt. Es sollte vor seiner Festlegung in der Höhe und in seitlichen Richtungen justierbar sein, um Fertigungstoleranzen bei der Montage ausgleichen zu können. Durch die Justierung werden gleich große und parallele Abstände zwischen dem Frontteil und angrenzenden Karosserieteilen, wie etwa der Motorhaube oder den seitlichen Fahrzeugleuchten, hergestellt. Zu diesem Zweck ist es bekannt, die korrespondierenden Befestigungslöcher im oberen, die Kühlerverkleidung bildenden Teil des Frontteils und in der Quertraverse der Karosserie als Langlöcher sich jeweils kreuzförmig überdeckend auszubilden und die übrigen Befestigungslöcher entsprechend überzudimensionieren, so daß die freie Verschiebbarkeit des Frontteils in Richtung zweier senkrecht aufeinanderstehenden Achsen einer Fahrzeugebene zum Zwecke der Justierung gegeben ist, bevor Befestigungsschrauben angezogen werden, die die Befestigungslöcher und gegebenenfalls in diesen angeordnete radial klemmende Spreizdübel durchgreifen.

Eine solche Anordnung und Zuordnung der korrespondierenden Befestigungslöcher hat den Nachteil, daß bei nicht ausreichenden Haltekräften eine Lockerung der Befestigung durch Erschütterungen im Fahrbetrieb mit Folge einer unerwünschten Absenkung des Frontteils in den senkrecht sich erstreckenden Langlöchern möglich ist. Auch bei Sichabstützen auf dem Frontteil bei geöffneter Motorhaube, beispielsweise durch einen Monteur, kann es zu ungewollter Abwärtsverschiebung des Frontteils in den Langlöchern kommen.

Aufgabe der Erfindung ist es, diese Nachteile zu vermeiden und eine Anordnung eines Kraftfahrzeug-Frontteils der eingangs genannten Art zu schaffen, die eine justierbare, stabile und sichere Befestigung an der Karosserie gewährleistet.

Zu diesem Zweck sind nach der Erfingung in einem Befestigungsflansch der Kühlerverkleidung horizontale Langlöcher angeordnet, die mit in der Quertraverse unter einem spitzen Winkel zur Fahrzeugstandebene geneigt angeordneten Langlöchern korrespondieren, wobei zur lagejustierbaren, gegenseitigen Fixierung in den Langlöchern der Quertraverse verschiebbar geführte Befestigungsmittel vorgesehen sind, die die korrespondierenden Langlöcher in der Kühlerverkleidung jeweils zur kraftschlüssigen Fixierung durchgreifen.

Durch diese erfindungsgemäße Anordnung wird unter Beibehaltung einer möglichen Lagejustierung des Frontteils in allen Richtungen einer Fahrzeugebene bei der Montage ein stabiler und lageunveränderlicher Sitz des Frontteils durch dessen abstützende Festlegung auf einer schiefen Ebene erreicht. Die kraftschlüssige Festlegung kommt demzufolge mit geringen Haltekräften aus und die Gefahr einer Lageveränderung des Frontteils im Fahrbetrieb ist praktisch ausgeschlossen.

Nach einer vorteilhaften Ausbildung können erfindungsgemäß die Langlöcher mit ihren Erstreckungsachsen jeweils einen in einem Bereich von etwa 20 Grad bis 40 Grad liegenden spitzen Winkel mit der Fahrzeugstandebene bilden, wobei sich zur Justierung üblicher Abstände zwischen Frontteil und angrenzenden seitlichen Scheinwerfern oder der Motorhaube ein spitzer Winkel von 22 Grad als ausreichend erwiesen hat.

Als Befestigungsmittel können in einer zweckmäßigen Weiterbildung der Erfindung spreizdübelartige Distanzstücke mit zentraler Bohrung vorgesehen sein, deren Dübel in die Langlöcher eingreifen und durch jeweils eine ein Loch großer Horizontalerstreckung im Befestigungsflansch der Kühlerverkleidung durchgreifend in die Dübelbohrung einschraubbare Befestigungsschraube kraftschlüssig an der Langlochwand festlegbar sind.

Jedes Distanzstück besteht hierbei vorteilhaft aus einem Spreizdübel mit angeformten Scheibenflansch, wobei zwischen beiden eine durch Rastschultern begrenzte Führungsnut zum Eingreifen in das Langloch angeordnet ist und kann mit weiterem Vorteil bei gelöster Befestigungsschraube mit seiner Führungsnut in das Langloch einklipsbar, in diesem verschiebbar und durch die das Karosserieblech hintergreifenden Rastschultern entgegen der Erstreckungsrichtung gerichtet sein. Hierdurch lassen sich bei nicht angezogenen Befestigungsschrauben die Distanzstücke in den Langlöchern der Quertraverse und somit über die durch die Löcher der Kühlerverkleidung hindurchgreifenden Befestigungsschrauben das gesamte Frontteil in sämtlichen Richtungen einer Fahrzeugebene bewegen und allseitig im gleichen Abstand zu den angrenzenden Karosserieteilen bringen. Vorausgesetzt ist natürlich eine entsprechende Toleranzbemessung der übrigen Befestigungsstellen zwischen Frontteil und Karosserietragwerken zur Aufnahme der Justierbewegungen des Frontteils in dem durch die sich überdeckenden, korrespondierenden Lochpaare vorgesehenen Umfang.

Die Erfindung läßt zahlreiche Ausführungsformen zu. Eine davon ist in der Zeichnung dargestellt und wird nachfolgend erläutert.

Es zeigen:

Fig. 1 ein Kraftfahrzeug-Frontteil in perspektivischer Explosionsdarstellung zum Vorderteil einer Fahrzeugkarosserie,

Fig. 2 das an der Karosserie befestigte Frontteil im Längsschnitt und

Fig. 3 eine Befestigungsstelle für das Frontteil in der Quertraverse nach dem Ausschnitt A in Fig. 1 in vergrößerter Darstellung.

Mit 1 ist allgemein ein Kraftfahrzeug-Frontteil bezeichnet, das an ein schematisch dargestelltes Vorderteil 2 einer Fahrzeugkarosserie anbringbar ist. Am Vorderteil 2 sind eine obere Quertraverse 3 und eine untere Quertraverse 4 dargestellt. Diese verbinden die beiden Radkästen 5, 6 miteinander und sind durch Stützträger 7 vertikal miteinander verbunden.

Das Frontteil 1 ist als einstückiges Kunststoff-Formteil ausgebildet und aus einem polymeren Material mit einem elastomeren Füllstoff in geeigneter Formgebungstechnik bekannter Art hergestellt. Es ist selbsttragend, kann aber auch in bestimmten Fällen - je nach Fahrzeugtyp und -größe - an seiner zur Karosserie gerichteten Innenwand durch metallische Einlagen armiert und über diese mit den Tragwerken der Karosserie verbunden sein. Das Frontteil 1 schließt eine mit Luftdurchlaßöffnungen versehene Kühlerverkleidung 8, einen Stoßfänger 9 mit seitlichen um die Fahrzeugkarosserie herumgezogenen Enden 9' sowie einen Frontspoiler 10 ein.

Die Befestigung des Frontteils 1 an der Karosserie bzw. deren Tragwerken erfolgt im oberen Bereich an drei Befestigungsstellen in Form von Langlöchern 11 in der oberen Quertraverse 3, ferner an zwei Befestigungsstellen 12 in seinem mittleren Bereich an den Enden der Längsträger der Fahrzeugkarosserie, sowie schließlich an zwei weiteren Befestigungsstellen 13 im unteren Bereich der seitlich herumgezogenen Stoßfängerenden über geeignete Halteteile. Die Befestigungen im mittleren und unteren Bereich des Frontteils 1 erfolgen in bekannter, nicht zur Erfindung gehörenden Weise entweder durch direktes Anschrauben oder Aufklipsen des Frontteils an geeignete Halteelemente der karosserieseitigen Tragwerke oder durch Aufklipsen an das Frontteil armierende Metallteile, die dann wiederum an den karosserieseitigen Tragwerken in geeigneten und bekannten Halterungen festlegbar sind.

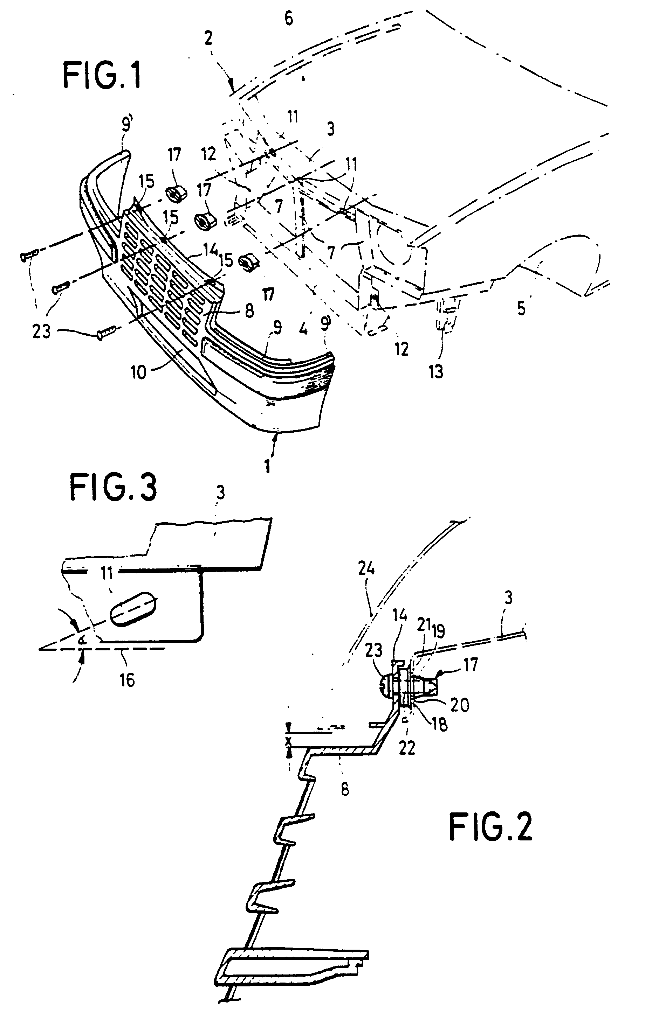

In einem Befestigungsflansch 14 der Kühlerverkleidung 8 befinden sich drei mit den Langlöchern 11 in der Quertraverse 3 korrespondierende Langlöcher 15 in horizontaler Erstreckung parallel zur Fahrzeugstandebene 16. Demgegenüber sind die Langlöcher 11 unter einem spitzen Winkel alpha von 22 Grad zur Fahrzeugstandebene 16 in der Quertraverse 3 angeordnet. In die Langlöcher 11 sind allgemein mit 17 bezeichnete, spreizdübelartige Distanzstücke aus Kunststoff so eingeklipst, daß sie sich jeweils innerhalb des Langloches 11 verschieben lassen. Zu diesem Zweck besitzt jedes Distanzstück 17 anschließend an einem die Langlochbreite überdeckenden Scheibenflansch 18 ein geschlitztes, spreizdübelartiges Einsteckteil 19 rechteckigen oder quadratischen Querschnitts mit einer durch zwei gegenüberliegende Rastschultern 20 begrenzten Führungsnut 21 sowie eine durchgehende, zentrale Bohrung 22. Bei der Montage des Frontteils 1 werden drei Befestigungsschrauben 23 durch die Langlöcher 11 der Kühlerverkleidungen 8 hindurchgeführt und in die Bohrungen 22 der vorher in die Quertraverse 3 eingeklipsten Distanzstücke 17 eingeschraubt. Anschließend werden die übrigen, wie oben ausgeführt nicht näher dargestellten Befestigungsmittel an den Befestigungsstellen 12 und 13 montiert. Vor dem endgültigen Festziehen der Schrauben 23 und aller übrigen Befestigungsmittel kann das Frontteil 1 sowohl durch Horizontalverschiebung mit Hilfe seiner Langlöcher 15 relativ zur Lage der Befestigungsschrauben 23 als auch durch eine Höhenverschiebung mit Hilfe der auf der schiefen Ebene der Langlöcher 11 verschiebbaren Distanzstücke 17 in allen Richtungen einer Fahrzeugebene bewegt werden, sofern - was als selbstverständlich und bekannt vorausgesetzt ist - die übrigen Befestigungsstellen 12, 13 so ausgebildet sind, daß sie eine solche Justierbewegung des gesamten Frontteils 1 zulassen. Durch die Justierverschiebung des Frontteils 1 lassen sich gleiche Abstände zu den benachbarten Fahrzeugscheinwerfern sowie ein paralleler Abstand x der von vorn sichtbaren Oberkante der Kühlerverkleidung 8 und der Vorderkante der in Fig. 2 in strichpunktierten Linien angedeuteten Motorhaube 24 herstellen, die das Aussehen der Frontpartie des Fahrzeugs günstig beeinflussen. Nach erfolgter Justierung werden die Befestigungsschrauben 23 sowie alle übrigen Befestigungsmittel endgültig festgezogen und damit das Frontteil 1 in durch Fahrbetrieb und normalen Gebrauch unveränderlicher Lage sicher gehalten.

**Patentansprüche**

1. Anordnung eines Kraftfahrzeug-Frontteils aus Kunststoff an der Fahrzeugkarosserie, das aus einem Stoßfänger (9) mit einer einteilig angeformten Kühlerverkleidung (8), besteht und an einem Tragwerk der Karosserie mindestens an zwei unteren (12) und drei oberen (11) Befestigungspunkten im Bereich der Karosserielängsträger bzw. einer die Radkästen verbindenden oberen Quertraverse (3) in Löchern bzw. Langlöchern kraftschlüssig gehalten ist,

dadurch gekennzeichnet, daß in einem Befestigungsflansch (14) der Kühlerverkleidung (8) horizontale Langlöcher (15) angeordnet sind, die mit in der Quertraverse (3) unter einem spitzen Winkel (alpha) zur Fahrzeugstandebene (16) geneigt angeordneten Langlöchern (11) korrespondieren, wobei zur lagejustierbaren, gegenseitigen Fixierung in den Langlöchern der Quertraverse verschiebbar geführte Befestigungsmittel vorgesehen sind, die die korrespondierenden Langlöcher (15) in der Kühlerverkleidung jeweils zur kraftschlüssigen Fixierung durchgreifen.

2. Anordnung nach Anspruch 1,
dadurch gekennzeichnet, daß die Langlöcher (11) mit ihren Erstreckungsachsen jeweils einen in einem Bereich von etwa 20 Grad bis 40 Grad liegenden spitzen Winkel (alpha) mit der Fahrzeugstandebene (16) bilden.

3. Anordnung nach Anspruch 2,
dadurch gekennzeichnet, daß der spitze Winkel (alpha), den die Erstreckungsachsen der Langlöcher jeweils mit der Standebene (16) bilden, 22 Grad beträgt.

4. Anordnung nach den Ansprüchen 1 bis 3,
dadurch gekennzeichnet, daß als Befestigungsmittel spreizdübelartige Distanzstücke (17) mit zentraler Bohrung (22) vorgesehen sind, deren Dübel (19) in die Langlöcher (11) eingreifen und durch jeweils eine ein Loch (15) großer Horizontalerstreckung im Befestigungsflansch (14) der Kühlerverkleidung (8) durchgreifend in die Dübelbohrung (22) einschraubbare Befestigungsschraube (23) kraftschlüssig an der Langlochwand festlegbar sind.

5. Anordnung nach Anspruch 4,
dadurch gekennzeichnet, daß jedes Distanzstück (17) aus einem Spreizdübel (19) mit angeformten Scheibenflansch (18) besteht und daß zwischen beiden eine durch Rastschultern (20) begrenzte Führungsnut (21) zum Eingreifen in das Langloch (11) angeordnet ist.

6. Anordnung nach den Ansprüchen 4 und 5,
dadurch gekennzeichnet, daß das Distanzstück (17) bei gelöster Befestigungsschraube (23) mit seiner Führungsnut (21) in das Langloch (11) einklipsbar, in diesem verschiebbar und durch die das Karosserieblech hintergreifenden Rastschultern (20) entgegen der Erstreckungsrichtung gerichtet ist.

## Claims

1. Arrangement on a motor vehicle body of a vehicle front section made of plastic, which consists of a bumper (9) with a radiator grille (8) moulded thereon in one piece, and which is retained frictionally in holes or slots on a body supporting structure at at least two lower (12) and three upper (11) mounting points in the region of the body longitudinal members or an upper cross member (3) connecting the wheelhousings,

characterised in that in a mounting flange (14) of the radiator grille (8) are arranged horizontal slots (15) which correspond to slots (11) arranged in the cross member (3) at an acute angle ($\alpha$) to the vehicle standing plane (16), wherein for mutual fixing with adjustable position there are provided fastening means which are guided slidably in the slots in the cross member and which pass through the corresponding slots (15) in the radiator grille for frictional fixing in each case.

2. Arrangement according to claim 1,
characterised in that the longitudinal axes of the slots (11) each form with the vehicle standing plane (16) an acute angle ($\alpha$) within a range from approximately 20 degrees to 40 degrees.

3. Arrangement according to claim 2,
characterised in that the acute angle ($\alpha$) formed by the longitudinal axis of each slot with the standing plane (16) comprises 22 degrees.

4. Arrangement according to claim 1 to 3,
characterised in that as the fastening means there are provided straddling dowel-like distance pieces (17) with a centre bore (22), the dowels (19) of which engage in the slots (11) and can be fixed frictionally against the slot wall, each by a fastening screw (23) which passes through a hole (15) with a large horizontal dimension in the mounting flange (14) of the radiator grille (8) and can be screwed into the dowol bore (22).

5. Arrangement according to claim 4,
characterised in that each distance piece (17) consists of a straddling dowel (19) with an integral disc flanke (18), and between tho two is disposed a guide groove (21) bounded by latching shoulders (20) for engagement in the slot (11).

6. Arrangement according to claims 4 and
characterised in that when the fastening screw (23) is released, the distance piece (17) can be clipped by its guide groove (21) into the slot (11) and slid therein, and is aligned opposite the direction in which it extends by the latching shoulders (20) which engage behind the body panel.

## Revendications

1. Agencement, sur la carrosserie d'un véhicule automobile, d'une partie frontale en matière plastique, qui comprend un pare-choc (9) d'un seul tenant avec une calandre de radiateur (8), et est maintenue, par serrage, à l'aide de trous circulaires ou de trous allongés, sur une ossature de la carrosserie en au moins deux points de fixation inférieurs (12) et trois points de fixation supérieurs (11), dans la région des longerons de la carrosserie ou d'une traverse supérieure (3) reliant les passages des roues,

caractérisé par le fait que des trous allongés

**0 160 955**

horizontaux (15) sont aménagés dans un rebord de fixation (14) de la calandre de radiateur (8) et correspondent avec des trous allongés (11) inclinés selon un angle aigu (α) par rapport au plan de base (16) du véhicule, aménagés dans la traverse (3), des moyens de fixation guidés et mobiles en translation étant prévus dans les trous allongés de la traverse, pour réaliser une fixation mutuelle autorisant un réglage de position, ces moyens de fixation traversant des trous allongés correspondants (15) dans la calandre de radiateur, pour réaliser la fixation par serrage.

2. Agencement selon revendication 1, caractérisé par le fait que les grands axes des trous allongés (11) forment, avec le plan de base (16) du véhicule, un angle aigu (α) compris entre environ 20° et 40°.

3. Agencement selon revendication 2, caractérisé par le fait que l'angle aigu (α) que les grands axes des trous allongés forment avec le plan de base (16) est de 22°.

4. Agencement selon les revendications 1 à 3, caractérisé par le fait qu'il est prévu, en tant que moyens de fixation, des pièces d'espacement (17) du genre cheville à expansion avec trou central (22), dont les parties expansibles (19) s'engagent dans les trous allongés (11) et peuvent être immobilisées à chaque fois par serrage contre la paroi du trou, au moyen d'une vis de fixation (23) qui traverse un trou (15) de grande étendue horizontale dans le rebord de fixation (14) de la calandre de radiateur (8) et peut être vissée dans le trou (22) de la pièce d'espacement.

5. Agencement selon revendication 4, caractérisé par le fait que chaque pièce d'espacement (17) est constituée par une cheville à expansion (19) dotée d'une joue (18) formée sur elle, et par le fait qu'il y a, entre ces deux éléments, une gorge de guidage (21) délimitée par des épaulements pour verrouillage par enclenchement et destinée à être engagée dans le trou allongé (11).

6. Agencement selon les revendications 4 et 5, caractérisé par le fait que, lorsque la vis de fixation (23) est desserrée, la pièce d'espacement (17) peut être enclenchée, par sa gorge de guidage (21), dans le trou allongé (11), être déplacée dans ce dernier et est maintenue orientée perpendiculairement au plan de la tôle de carrosserie à l'endroit du trou allongé, par les épaulements pour verrouillage par enclenchement (20) engagés derrière ladite tôle.

FIG.1

FIG.3

FIG.2